# EUROPÄISCHE PATENTSCHRIFT

(11) **EP 2 952 761 B1**
(45) Veröffentlichungstag und Bekanntmachung des Hinweises auf die Patenterteilung: **03.01.2018**
(21) Anmeldenummer: 15167456.1
(22) Anmeldetag: 13.05.2015
(51) Int. Cl.: F16C 29/06, F16C 29/08, F16C 33/66

(54) **FÜHRUNGSWAGEN MIT BEFESTIGUNGSBOHRUNG, WELCHE BESTANDTEIL EINES SCHMIERMITTELSTRÖMUNGSPFADES IST**
GUIDE CARRIAGE COMPRISING FASTENING HOLE WHICH IS PART OF A LUBRICANT FLOW PATH
CHARIOT DE GUIDAGE DOTÉ D'ALÉSAGE DE FIXATION FAISANT PARTIE D'UN PASSAGE D'ÉCOULEMENT DE LUBRIFIANT

(30) Priorität: 28.05.2014 DE 102014210171
(43) Veröffentlichungstag der Anmeldung: 09.12.2015
(73) Patentinhaber: ROBERT BOSCH GMBH, 70442 Stuttgart (DE)
(72) Erfinder: Kuehnlein, Richard, 97782 Graefendorf (DE); Kuellstaedt, Wolfgang, 97506 Grafenrheinfeld (DE); Spatschek, Gerd, 97638 Mellrichstadt (DE); Dorn, Stefan, 97450 Arnstein (DE); Zeier, Matthias, 97789 Oberleichtersbach (DE); Roesch, Gerhard, 97493 Bergrheinfeld (DE); Schenk, Juergen, 97478 Knetzgau (DE); Elting, Martina, 97422 Schweinfurt (DE); Korbacher, Michael, 97537 Wipfeld (DE); Schierling, Sebastian, 97478 Knetzgau-Oberschwappach (DE)
(74) Vertreter: Maiß, Harald

(56) Entgegenhaltungen:
- EP-A1- 1 296 075
- WO-A1-2013/114475
- JP-A- 2006 226 428
- JP-A- 2008 002 493
- US-A- 4 850 720

## Beschreibung

Die Erfindung betrifft einen Führungswagen gemäß dem Oberbegriff von Anspruch 1.

Aus der EP 971 140 B1 ist ein Führungswagen bekannt, der zur Verwendung mit einer langgestreckten Führungsschiene vorgesehen ist. Der Führungswagen umfasst vier Reihen von kugelförmigen Wälzkörpern, die jeweils in einem zugeordneten endlosen Umlaufkanal aufgenommen sind. Jeder Umlaufkanal umfasst einen Tragabschnitt und einen Rücklaufkanal, welche an beiden Enden über je einen gebogenen Umlenkkanal miteinander verbunden sind. Der Tragabschnitt wird von einer Wagenlaufbahn an dem Führungswagen und einer Schienenlaufbahn an der Führungsschiene begrenzt, welche sich jeweils in eine Längsrichtung erstrecken. Alle Umlenkkanäle sind innerhalb zweier gesonderter Endkappen angeordnet, welche an den beiden gegenüberliegenden Längsstirnflächen des Hauptkörpers des Führungswagens befestigt sind. Zwischen der Endkappe und dem Hauptkörper ist eine gesonderte Dichtplatte angeordnet, wobei die vorliegende Erfindung auch für Führungswägen ohne eine solche Dichtplatte verwendbar ist. Jede Endkappe weist insgesamt zwei Befestigungsbohrungen auf, welche von einer zugeordneten Befestigungsschraube durchsetzt werden, welche in den Hauptkörper eingeschraubt ist.

Weiter sind in dem Führungswagen mehrere Schmiermittelströmungspfade vorgesehen, die sich jeweils von einem Schmiermittelanschluss zu einer Reihe von Wälzkörpern erstrecken. Dabei sind insgesamt zwei seitliche Schmieranschlüsse, ein stirnseitiger Schmieranschluss und ein oberer Schmieranschluss an der Endkappe vorgesehen, von denen jeweils nur ein einziger genutzt wird, wobei die übrigen Schmieranschlüsse dicht verschlossen sind.

Der Nachteil des bekannten Führungswagens besteht darin, dass ein Abschnitt dieses Schmiermittelströmungspfades mit sehr geringem Abstand an der Befestigungsbohrung vorbei geführt werden muss. Hierdurch ergeben sich Probleme bei der Abdichtung des Schmiermittelströmungspfades gegen Austritt von Schmiermittel.

Aus der US 4 850 720 A ist ein Führungswagen gemäß dem Oberbegriff des Anspruchs 1 bekannt. Der erste Hohlraum ist in dem Sinne Bestandteil des Schmiermittelströmungspfades, dass Schmiermittel vom Schmiermittelströmungspfad in den ersten Hohlraum gelangen kann.

Aus der EP 1 296 075 A1, der JP 2006 226428 A, der WO 2013/114475 A1 und der JP 2008 002493 A sind weitere Führungswägen bekannt.

Der Vorteil der vorliegenden Erfindung besteht darin, dass der Schmiermittelströmungspfad besonders gut gegen Schmiermittelaustritt abgedichtet ist, wobei der Führungswagen besonders kostengünstig herstellbar ist. Weiter weist der erfindungsgemäße Führungswagen besonders wenige Einzelteile auf.

Gemäß dem selbständigen Anspruch wird vorgeschlagen, dass zumindest zwischen einer der wenigstens einen Befestigungsbohrung und der zugeordneten Befestigungsschraube ein erster Hohlraum vorgesehen ist, welcher Bestandteil eines des wenigstens einen Schmiermittelströmungspfades ist. Hierdurch entfällt die Notwendigkeit, den Schmiermittelströmungspfad mit geringem Abstand an der Befestigungsbohrung vorbeizuführen. Vorzugsweise ist der Führungswagen im Querschnitt betrachtet U-förmig mit einer Basis und zwei U-Schenkeln ausgebildet, wobei jedem U-Schenkel eine einzige Befestigungsbohrung zugeordnet ist, wobei beide Befestigungsbohrungen Bestandteil von unterschiedlichen Schmiermittelströmungspfaden sind. Der erste Hohlraum ist idealerweise kreisringförmig ausgebildet, wobei es aufgrund von Montagetoleranzen zu Abweichungen hinsichtlich der Mittenlage der Befestigungsschraube relativ zur Befestigungsbohrung kommen kann. Der wenigstens eine Schmiermittelströmungspfad weist vorzugsweise mehrere Abschnitte auf, die in Form von Kanälen ausgebildet sind. Es können geschlossene Kanäle in einem einzigen Bauteil vorgesehen sein. Es können aber auch offene Kanäle in einem Bauteil vorgesehen sein, die von einem anderen Bauteil überdeckt werden, so dass sich ein geschlossener Kanal ergibt.

Die wenigstens eine Befestigungsbohrung ist vorzugsweise parallel zur Längsrichtung ausgerichtet. Der Rücklaufkanal verläuft vorzugsweise parallel zur Längsrichtung und wird höchst vorzugsweise unmittelbar vom Hauptkörper begrenzt. Die Wälzkörper sind vorzugsweise Kugeln. Die Längsstirnfläche des Hauptkörpers ist vorzugsweise eben. Das Schmiermittel ist vorzugsweise Schmieröl oder Schmierfett. Der Hauptkörper besteht vorzugsweise aus Metall, insbesondere aus Stahl. Die wenigstens eine Endkappe besteht vorzugsweise aus Kunststoff, insbesondere aus Polyamid. Höchst vorzugsweise wird sie im Spritzgussverfahren hergestellt. Die Wagenlaufbahnen sind vorzugsweise an einer gesonderten, sich in Längsrichtung erstreckenden Laufbahneinlage angeordnet, welche am Hauptkörper anliegt. Die Laufbahneinlage besteht vorzugsweise aus gehärtetem Stahl.

In den abhängigen Ansprüchen sind vorteilhafte Weiterbildungen und Verbesserungen der Erfindung angegeben.

Es ist bevorzugt, dass mehrere Schmiermittelströmungspfade vorgesehen sind, denen unterschiedliche Schmieranschlüsse und/oder Reihen von Wälzkörpern zugeordnet sind, wobei alle Schmiermittelströmungspfade einen gemeinsamen zweiten Hohlraum aufweisen, wobei der erste Hohlraum wälzkörperseitig zum zweiten Hohlraum im entsprechenden Schmiermittelströmungspfad angeordnet ist. Damit fließt das Schmiermittel unabhängig von dem gewählten Schmiermittelströmungspfad immer über den ersten Hohlraum. Es kann daher, ganz gleich welcher Schmiermittelanschluss gewählt wird, zu jeder Reihe von Wälzkörpern fließen. Dabei kann der Strömungswiderstand zu allen Reihen von Wälzkörpern in etwa gleich dimensioniert werden, da der zentrale zweite Hohlraum stromaufwärts zum ersten Hohlraum angeordnet ist.

Es ist vorgesehen, dass die Endkappe von einer Schmierbohrung durchsetzt wird, welche sich ausgehend von einer äußeren, dem Hauptkörper abgewandten Längsstirnfläche der Endkappe in Längsrichtung erstreckt, wobei die Schmierbohrung wälzkörperseitig zum ersten Hohlraum im entsprechenden Schmiermittelströmungspfad angeordnet ist. Der entsprechende Schmiermittelströmungspfad hat eine besonders kurze Länge und ein dementsprechend geringes Volumen. Es ist daher möglich, Schmiermittelimpulse mit sehr kleinen Schmiermittelvolumina zu verwenden, ohne dass eine Mangelschmierung des Führungswagens zu befürchten ist.

Es ist bevorzugt, dass wenigstens zwei Reihen von Wälzkörpern vorgesehen sind, die zwei benachbarte, parallele Umlenkkanäle aufweisen, wobei sie jeweils eine radial äußere Umlenkoberfläche aufweisen, welche unmittelbar an der Endkappe angeordnet sind, wobei eine Mündungsöffnung der Schmierbohrung zwischen den genannten äußeren Umlenkoberflächen angeordnet ist. Die parallelen, gekrümmten Umlenkkanäle weisen vorzugsweise eine gemeinsame Krümmungsachse auf. Die äußeren Umlenkflächen sind vorzugsweise radial außen bezüglich der Krümmungsachse angeordnet. Der Weg von der Mündungsöffnung zu den an den äußeren Umlenkflächen entlang laufenden Wälzkörpern ist sehr kurz, so dass sich insgesamt ein kurzer Schmiermittelströmungspfad ergibt, der einfach herstellbar ist.

Es ist bevorzugt, dass eine radial innere Umlenkoberfläche des Umlenkkanals an einem gesonderten Wälzkörperführungsteil angeordnet ist, welches eine Abflachung aufweist, die gegenüberliegend zu einer Mündungsöffnung der Schmierbohrung angeordnet ist. Durch die genannte Abflachung wird ein Hohlraum geschaffen, in dem das Schmiermittel von der genannten Mündungsöffnung zur den Wälzkörpern fließen kann.

Es ist vorgesehen, dass an der äußeren Längsstirnfläche der Endkappe ein erster offener Schmierkanal vorgesehen ist, welcher den ersten Hohlraum mit der Schmierbohrung verbindet, wobei er von einer gesonderten Enddichtung abgedeckt wird, welche zumindest abschnittsweise in Form einer ebenen Platte ausgebildet ist. Der erste offene Schmierkanal kann besonders einfach und kostengünstig im Kunststoffspritzgussverfahren hergestellt werden. Die Enddichtung besteht vorzugsweise aus einem Elastomer, so dass sie den ersten offenen Schmierkanal besonders dicht abdeckt. Zu beiden Seiten des offenen ersten Schmierkanals ist vorzugsweise eine Dichtlippe an der Endkappe angeordnet. Der plattenartige Abschnitt der Enddichtung weist vorzugsweise eine konstante Dicke auf.

Es ist bevorzugt, dass der erste offene Schmierkanal in eine ringförmig um die zugeordnete Befestigungsbohrung umlaufende Verteilausnehmung einmündet. Die genannte Verteilausnehmung ist vorzugsweise in der Art einer Senkung an der Befestigungsbohrung ausgebildet. Hierdurch soll erreicht werden, dass das Schmiermittel unabhängig vom toleranzbedingten Mittenfehler der Befestigungsschraube in der Befestigungsbohrung durch den ersten Hohlraum fließen kann. Die in die Verteilausnehmung einmündende Mündungsöffnung des ersten offenen Schmierkanals kann in keinem Fall von der Befestigungsschraube abgedeckt werden.

Es ist bevorzugt, dass die Enddichtung eine Enddichtlippe aufweist, welche so angeordnet ist, dass sie in Dichteingriff mit der Führungsschiene steht, wenn der Führungswagen auf dieser montiert ist. Damit dichtet die Enddichtung den Führungswagen auch gegen Eindringen von Fremdkörpern, insbesondere Schmutz, ab.

Es ist bevorzugt, dass die Enddichtung von einem Abstreifblech aus Metall überdeckt wird, wobei die wenigstens eine Befestigungsschraube sowohl das Abstreifblech als auch die Enddichtung durchsetzt. Damit wird die Spannkraft der Befestigungsschraube durch das steife Abstreifblech im Wesentlichen gleichmäßig auf die gesamte Enddichtung verteilt. Das Abstreifblech wird, ausgehend von einer ebenen Platte mit konstanter Dicke durch Tiefzieh-, Biege- und/oder Stanzbeabreitung hergestellt. Es besteht vorzugsweise aus nichtrostendem Stahl. Im Bereich der Führungsschiene ist das Abstreifbleich vorzugsweise mit einem geringen Abstand von beispielweise 0,3 mm bis 1 mm äquidistant zur Führungsschiene ausgebildet. Damit kann es Fremdkörper von der Führungsschiene abstreifen, ohne diese zu berühren. Die Enddichtung wird damit vor Beschädigungen geschützt.

Es ist bevorzugt, dass die wenigstens eine Befestigungsschraube einen Kopf aufweist, welcher an dem Abstreifblech anliegt, wobei die Befestigungsschraube derart an den verbleibenden Führungswagen angepasst ist, dass das Abstreifblech den einzigen Schraubanschlag für die Befestigungsschraube bildet. Damit kann eine dichtende Anlage des Kopfes an dem Abstreifblech erreicht werden. Die entsprechende Dichtkraft wird durch das Schraubdrehmoment eingestellt, mit dem die Befestigungsschraube in den Hauptkörper eingeschraubt wird. Vorzugsweise weist das Abstreifblech eine Kegelsenkung auf, die höchstvorzugsweise tiefgezogen ist. Der Kopf der Befestigungsschraube ist vorzugsweise kegelförmig ausgebildet.

Es ist bevorzugt, dass die Endkappe eine innere Längsstirnfläche aufweist, welche dem Hauptkörper zugewandt ist, wobei die innere Längsstirnfläche zumindest abschnittsweise von wenigstens einem Versteifungssteg gebildet wird, der sich parallel zur Längsrichtung erstreckt, wobei an dem wenigstens einen Versteifungssteg im Bereich der inneren Längsstirnfläche ein zweiter offener Schmierkanal vorgesehen ist, welcher Bestandteil des wenigstens einen Schmiermittelströmungspfades ist. Auf die aus der EP 971 140 B1 bekannte Dichtplatte kann daher verzichtet werden. Trotzdem ist ein Verzug der Endkappe oder eine Undichtigkeit des Schmiermittelströmungspfades nicht zu befürchten.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird im Folgenden anhand der beigefügten Zeichnungen näher erläutert. Es stellt dar:
- Fig. 1: eine Explosionsansicht eines erfindungsgemäßen Führungswagens;
- Fig. 2: einen Querschnitt des Führungswagens nach Fig. 1 mit der zugeordneten Führungsschiene;
- Fig. 3: eine perspektivische Ansicht der Endkappe von der dem Hauptkörper zugewandten Seite;
- Fig. 3a: eine grobschematische Querschnittansicht des ersten Hohlraums;
- Fig. 4: eine perspektivische Ansicht der Endkappe von der dem Hauptkörper abgewandten Seite; und
- Fig. 5: eine perspektivische Teilansicht des Wälzkörperführungsteils im Bereich der radial inneren Umlenkoberflächen.

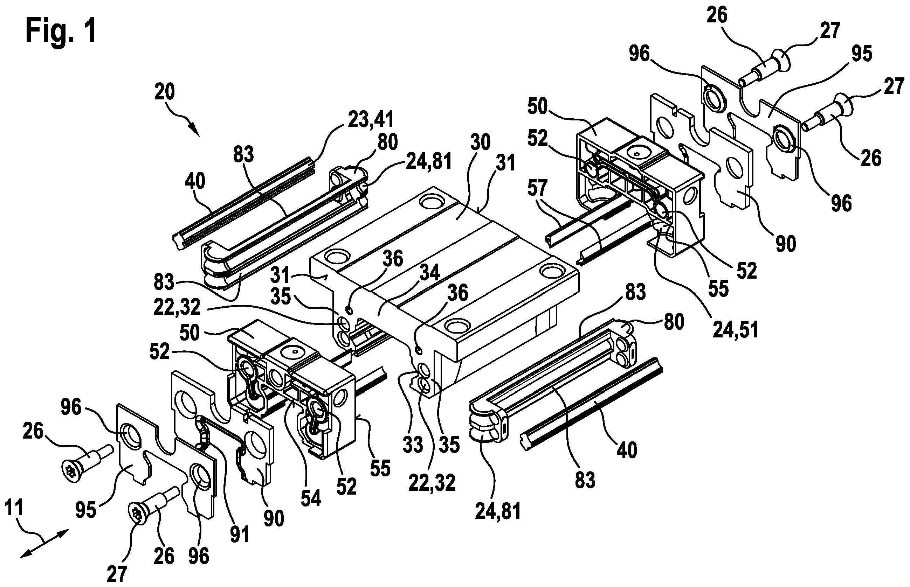

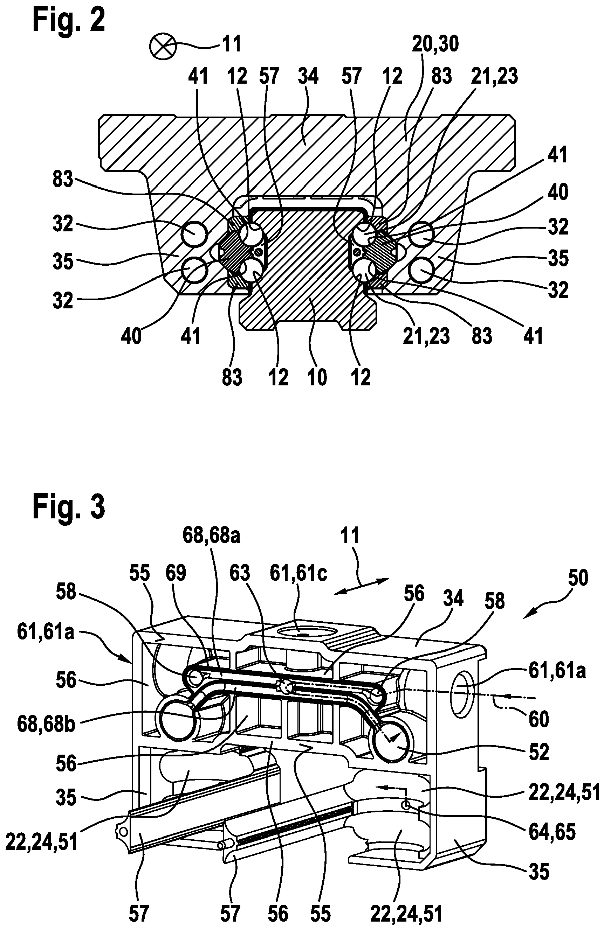

Fig. 1 zeigt eine Explosionsansicht eines erfindungsgemäßen Führungswagens 20. Der Führungswagen 20 umfasst einen Hauptkörper 30 aus ungehärtetem Stahl, der sich mit einer im Wesentlichen konstanten, U-förmigen Querschnittsform in eine Längsrichtung 11 erstreckt. An der Innenseite der U-Schenkel 35 ist jeweils eine V-förmige Nut 33 angeordnet, an der jeweils eine gesonderte Laufbahneinlage 40 anliegt, welche aus gehärtetem Wälzlagerstahl besteht. Die beiden Laufbahneinlagen 40 erstrecken sich mit einer im Wesentlichen konstanten Querschnittsform in Längsrichtung 11, wobei sie jeweils zwei Wagenlaufbahnen 41 aufweisen, so dass der Führungswagen insgesamt vier Reihen von Wälzkörpern (Nr. 21 in Fig. 2) hat. Die vorliegende Erfindung ist auch für Führungswägen verwendbar, bei denen die gehärtete Wagenlaufbahn unmittelbar am Hauptkörper 30 angeordnet ist.

An den beiden gegenüberliegenden, ebenen Längsstirnflächen 31 des Hauptkörpers 30 liegt je eine Endkappe 50 mit einer inneren Längsstirnseite 55 unmittelbar an. Die beiden Endkappen 50 sind identisch ausgebildet, wobei sie aus Kunststoff im Spritzgussverfahren hergestellt sind. Für jede der vier Wälzkörperreihen ist in den beiden Endkappen je eine radial äußere Umlenkoberfläche 51 eines gebogenen Umlenkkanals 24 vorgesehen. In die Endkappe 50 sind jeweils zwei zugeordnete Enden der beiden Wälzkörperführungsteile 80 eingesetzt, an denen die radial inneren Umlenkoberflächen 81 der gebogenen Umlenkkanäle 24 vorgesehen sind.

Zwischen den gebogenen Umlenkkanälen 24 in den gegenüberliegenden Endkappen 50 verläuft ein Rücklaufkanal 32, der vorliegend unmittelbar im Hauptkörper 30 in Form einer kreisrunden Bohrung ausgebildet ist, welche an ihren beiden Enden mit einer Kegelsenkung versehen ist. Die vorliegende Erfindung ist aber auch für Führungswägen verwendbar, bei denen der Rücklaufkanal in einem gesonderten Rücklaufrohr oder außen am Hauptkörper ausgebildet ist.

In den Endkappen 50 sind je zwei kreisrunde Befestigungsbohrungen 52 angeordnet, welche sich in Längsrichtung 11 erstrecken. Die Befestigungsbohrungen 52 werden jeweils von einer zugeordneten Befestigungsschraube 26 durchsetzt, welche endseitig ein Außengewinde aufweist, welches in ein zugeordnetes Innengewinde 36 im Hauptkörper 30 eingeschraubt ist. Das Innengewinde 36 ist in etwa im Bereich des Übergangs zwischen der Basis 34 und einem zugeordneten U-Schenkel 35 des Hauptkörpers 30 angeordnet, damit die beiden Befestigungsschrauben 26 die zugeordnete Endkappe 50 über die gesamte innere Längsstirnfläche 55 gleichmäßig an die Längsstirnfläche des Hauptkörpers 30 andrücken.

Auf der äußeren Längsstirnfläche 54 der Endkappe 50 liegt jeweils eine U-förmige Enddichtung 90 auf, welche im Wesentlichen als ebene Platte mit konstanter Dicke ausgebildet ist, wobei sie aus einem Elastomer, insbesondere thermoplastischem Ether Ester Elastomer (TEEE, Handelsname "Hytrel") besteht. Die Enddichtung 90 ist mit einer Enddichtlippe 91 versehen, welche dichtend an der Führungsschiene (Nr. 10 in Fig. 2) anliegt.

Außen auf der Enddichtung 90 liegt wiederum jeweils ein U-förmiges Abstreifblech 95 auf, welches in Form einer ebenen Platte mit konstanter Dicke ausgebildet ist, wobei es aus nichtrostendem Stahl besteht. Das Abstreifblech 95 ist mit geringem Abstand äquidistant zur Führungsschiene ausgebildet, so dass es Fremdkörper, beispielsweise Metallspäne, von dieser abstreifen kann. Die Befestigungsschrauben 26 durchsetzen sowohl das Abstreifblech 95 als auch die Enddichtung 90. Dabei liegt ein kegelförmiger Kopf 27 der Befestigungsschraube 26 an einer tiefgezogenen kegelförmigen Senkung 96 an dem Abstreifblech 95 an. Die Senkung 96 ist dabei so genau an den Kopf 27 angepasst, dass über den gesamten Umfang eine fluiddichte Berührung gegeben ist, damit dort kein Schmiermittel austritt. Der Kopf 27 der Befestigungsschraube 26 ist mit einem Torx-Profil zum Eingriff eines Schraubwerkzeugs versehen. Am Grund des Torx-Profils ist ein Innengewinde in der Befestigungsschraube 26 angeordnet, um beispielsweise einen Messkopf entsprechend der DE 10 2006 027 061 B4 am Führungswagen 20 zu befestigen.

Weiter ist noch auf die Wälzkörperhaltestege 57 hinzuweisen, welche einstückig an den Endkappen 50 ausgebildet sind, wobei sie sich zwischen die U-Schenkel 35 des Hauptkörpers 30 erstrecken. Die Wälzkörperhaltestege 57 der beiden Endkappen 50 erstrecken sich zusammen lückenlos über die gesamte Länge des Hauptkörpers 30.

Fig. 2 zeigt einen Querschnitt des Führungswagens 20 nach Fig. 1 mit der zugeordneten Führungsschiene 10. Die Schnittebene verläuft dabei senkrecht zur Längsrichtung 11 in der Mitte des Hauptkörpers 30.

Die Führungsschiene 10 besteht aus Stahl und ist im Bereich der Schienenlaufbahnen 12 randschichtgehärtet. Sie erstreckt sich mit der dargestellten konstanten Querschnittsform gerade entlang der Längsrichtung 11. An der Führungsschiene 12 sind insgesamt vier Schienenlaufbahnen 12 angeordnet, die zusammen mit den gegenüberliegenden Wagenlaufbahn 41 den Tragabschnitt 23 des endlosen Umlaufkanals begrenzen. Die Schienen- und die Wagenlaufbahnen 12; 41 sind im Querschnitt betrachtet kreisförmig ausgebildet, wobei sie mit einer engen Schmiegung an die kugelförmigen Wälzkörper 12 angepasst sind. Weiter ist auf den Wälzkörperhaltesteg 57 hinzuweisen, der die Wälzkörper 21 zusammen mit den Führungsabschnitten 83 der Wälzkörperhalteteile im Führungswagen 20 hält, wenn sich dieser nicht auf der Führungsschiene 10 befindet.

Der vorliegende Führungswagen 20 hat vier Reihen von endlos umlaufenden Wälzkörpern 21, welche in einer sogenannten O-Anordnung belastet werden. Die vorliegende Erfindung ist aber genauso gut für Führungswägen mit X-Anordnung oder für Führungswägen mit rollenförmigen Wälzkörpern anwendbar.

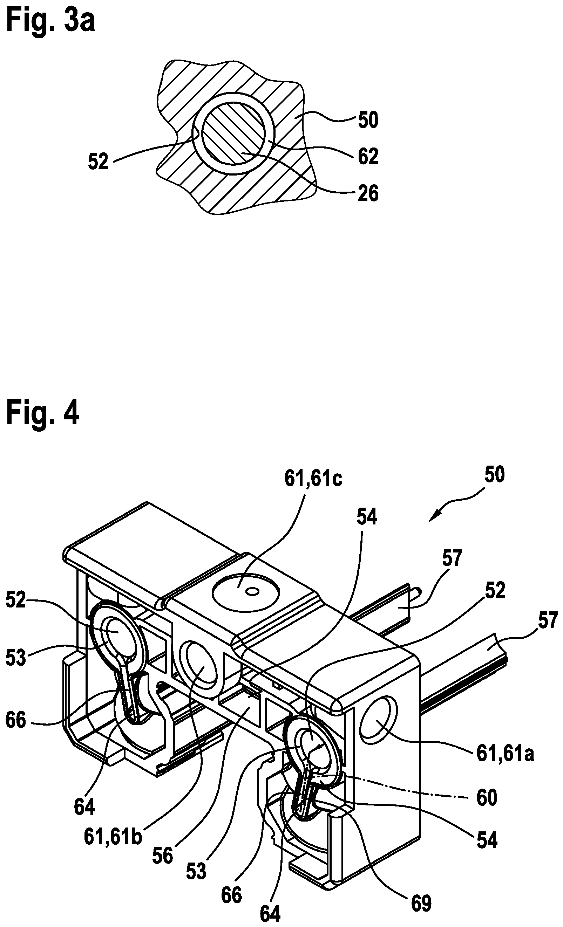

Fig. 3 zeigt eine perspektivische Ansicht der Endkappe 50 von der dem Hauptkörper zugewandten Seite. Die Endkappe 50 wird aus Kunststoff, insbesondere aus Polyamid im Spritzgussverfahren hergestellt. Um einen Verzug beim Erstarren des Kunststoffes zu vermeiden, ist sie überall mit einer im Wesentlichen konstanten Wanddicke ausgebildet. Sie umfasst dementsprechend eine Vielzahl von plattenartigen Versteifungsstegen 56, die sich in Längsrichtung 11 erstrecken. Die Stirnflächen dieser Stege 56 bilden eine ebene innere Längsstirnfläche 55 der Endkappe 50, welche an der ebenen Längsstirnfläche des Hauptkörpers anliegt.

Im Bereich der Basis 34 der insgesamt U-förmigen Endkappe 50 ist ein Schmierkanalsystem angeordnet, welches mehrere Schmiermittelströmungspfade aufweist, wobei ein Schmiermittelströmungspfad mit einer Strichpunktlinie 60 gekennzeichnet ist. Der gekennzeichnete Schmiermittelströmungspfad 60 beginnt an einem seitlichen Schmieranschluss 61a, welcher in Form eines Innengewindes ausgebildet ist. Er setzt sich über eine kreiszylindrische Längsbohrung 58 fort, welche sich in Längsrichtung 11 erstreckt. Die Längsbohrung 58 ist an dem dem Hauptkörper zugewanden (in Fig. 3 sichtbaren) Ende offen, wobei sie am gegenüberliegenden Ende dicht verschlossen ist. Sie verläuft mit geringem Abstand am Grund des zugeordneten seitlichen Schmieranschlusses 61a vorbei, so dass dort im Auslieferungszustand des Führungswagens eine dünne Kunststoffhaut verbleibt, die vom Benutzer durchstoßen werden muss, wenn der betreffende Schmieranschluss 61a verwendet werden soll. Andernfalls verhindert die genannte Kunststoffhaut, dass Schmiermittel aus einem unbenutzten Schmieranschluss 61 austritt.

Benachbart zu den Längsbohrungen 58 sind die Befestigungsbohrungen 52 angeordnet, welche die Endkappe in Längsrichtung 11 durchsetzen. Die Befestigungsbohrung 52 begrenzt, wie in Fig. 3a dargestellt, zusammen mit der Befestigungsschraube 26 einen kreisringförmigen ersten Hohlraum 62, welcher sich über die gesamte Länge der Endkappe 50 erstreckt. Der Schmiermittelströmungspfad 60 führt jedoch nicht auf kürzestem Wege zur Befestigungsbohrung 52. Vielmehr führen alle Schmiermittelpfade, welche von einem beliebigen Schmieranschluss 61 zu einer beliebigen inneren radial äußeren Umlenkoberfläche 51 verlaufen, über einen zentralen zweiten Hohlraum 63, so dass alle Schmiermittelpfade in etwa gleich lang sind, wobei sie dem Schmiermittel in etwa den gleichen Durchflusswiderstand entgegen setzen. Der zweite Hohlraum 63 fällt mit einer Längsbohrung zusammen, welche zum oberen Schmieranschluss 61c und zum stirnseitigen Schmieranschluss (Nr. 61b in Fig. 4) führt. Es kann aber auch daran gedacht sein, den zweiten Hohlraum als Vertiefung in der inneren Längsstirnfläche 55 der Endkappe 50 auszubilden, welche von der Längsstirnfläche des Hauptkörpers abgedeckt wird.

Von den Längsbohrungen 58 zu dem zweiten Hohlraum 63 führt ein erster Abschnitt 68a eines zweiten Schmierkanals 68, der als offener Kanal ausgebildet ist, welcher von der Längsstirnfläche des Hauptkörpers abgedeckt wird. Vom zweiten Hohlraum 63 zur Befestigungsbohrung 52 führt ein zweiter Abschnitt 68b, der analog zum ersten Abschnitt 68a des zweiten Schmierkanals 68 ausgebildet ist. Zu beiden Seiten des zweiten Schmierkanals 68 ist je ein Dichtvorsprung 69 angeordnet, der beim Anschrauben der Endkappe 50 an den Hauptkörper plastisch verformt wird, so dass der Schmiermittelströmungspfad 60 dicht verschlossen ist. Bei der Dimensionierung der Höhe des Dichtvorsprungs 69 wurde die elastische Verformung der Endkappe 50 beim Festschrauben am Hauptkörper berücksichtigt, indem der Dichtvorsprung 69 umso höher ausgeführt ist, je weiter er von den Befestigungsbohrungen 52 entfernt ist. Der Dichtvorsprung 69 umgibt darüber hinaus die Befestigungsbohrung 52. Weiter haben der erste und der zweite Abschnitt 68a, 68b des zweiten Schmierkanals 68 einen gemeinsamen Dichtvorsprung 69, der in erster Linie sicherstellt, dass das Schmiermittel über den zweiten Hohlraum 63 fließt

Der offene zweite Schmierkanal 68 ist vollständig an der Stirnfläche eines einzigen zugeordneten Stegs vorgesehen. Es kann aber auch daran gedacht sein, die entsprechenden ersten und zweiten Abschnitte 68a, 68b an voneinander gesondert ausgebildeten Stegen auszubilden, die über den zweiten Hohlraum 63 miteinander verbunden sind.

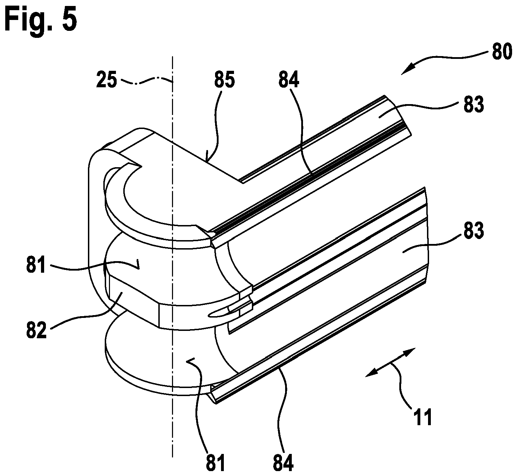

Weiter ist in Fig. 3 zwischen zwei benachbarten radial äußeren Umlenkoberflächen 51 eine Mündungsöffnung 65 einer Schmierbohrung 64 zu erkennen, welche die Endkappe in Längsrichtung 11 durchsetzt. Die Schmierbohrung 64 ist Bestandteil des vorstehend beschriebenen Schmiermittelströmungspfades 60, welcher im Übrigen auf der gegenüberliegenden Seite der Endkappe 50 verläuft. Gegenüberliegend zur Mündungsöffnung 65 ist eine Abflachung (Nr. 82 in Fig. 5) an dem zugeordneten Wälzkörperführungsteil vorgesehen, so dass sich dort ein Freiraum befindet, durch den das Schmiermittel zu den vorbei laufenden Wälzkörpern fließen kann.

Fig. 4 zeigt eine perspektivische Ansicht der Endkappe 50 von der dem Hauptkörper abgewandten Seite. Die bereits angesprochenen Versteifungsstege 56 sind auch auf dieser Seite der Endkappe 50 zu erkennen, wobei sie dort eine ebene äußere Längsstirnfläche 54 der Endkappe 50 bilden, auf der die Enddichtung (Nr. 90 in Fig. 1) aufliegt. In der entsprechenden Ebene verläuft ein offener erster Schmierkanal 66, der Bestandteil des Schmiermittelströmungspfades 60 ist, wobei er die Befestigungsbohrung 52 mit der Schmierbohrung 64 auf geradem Weg verbindet. Der erste Schmierkanal 66 wird von der Enddichtung (Nr. 90 in Fig. 1) abgedeckt, so dass kein Schmiermittel austreten kann. Der erste Schmierkanal 66 mündet in eine ringförmig um die Befestigungsbohrung 52 umlaufende Verteilausnehmung 53 ein, welche in der Art einer Senkung ausgebildet ist. Die Verteilausnehmung 53 ist in erster Linie für den Fall vorgesehen, dass die Befestigungsschraube (Nr. 26 in Fig. 1) toleranzbedingt genau an der Mündungsöffnung des ersten Schmierkanals 66 an der Seitenwand der Befestigungsbohrung 52 anliegt. Dann kann immer noch Schmiermittel an der Befestigungsschraube vorbei vom ersten Hohlraum (Nr. 62 in Fig. 3a) in den ersten Schmierkanal 66 fließen.

Der erste Schmierkanal 66 und die Befestigungsbohrung 52 werden von einem Dichtvorsprung 69 unterbrechungsfrei umgeben, welcher sich in die elastische Enddichtung eindrückt, um die Abdichtung zu verbessern.

Fig. 5 zeigt eine perspektivische Teilansicht des Wälzkörperführungsteils 80 im Bereich der radial inneren Umlenkoberflächen 81. Einem Wälzkörperführungsteil 80 sind zwei parallel laufende Reihen von Wälzkörpern zugeordnet. Es weist daher an beiden Enden zwei radial innere Umlenkoberflächen 81 des Umlenkkanals auf, die bezüglich einer gemeinsamen Krümmungsachse 25 mit dem gleichen Radius kreisförmig gebogen verlaufen. Zwischen den beiden radial inneren Umlenkoberflächen 81 ist die bereits angesprochene ebene Abflachung 82 angeordnet.

Weiter sind an dem Wälzkörperführungsteil 80 zwei parallele Führungsabschnitte 83 einstückig vorgesehen, welche mit einer konstanten Querschnittsform in Längsrichtung 11 verlaufen. An den Führungsabschnitten 83 ist jeweils eine Längsdichtlippe 84 vorgesehen, welche dichtend an der Führungsschiene anliegt, wenn der Führungswagen auf dieser montiert ist. Weiter halten die Führungsabschnitte 83 die Wälzkörper im Führungswagen, wenn sich dieser nicht auf der Führungsschiene befindet.

Das Wälzkörperführungsteil 80 ist spiegelsymmetrisch bezüglich einer ersten Symmetrieebene ausgebildet, welche senkrecht zur Krümmungsachse 25 der gebogenen Umlenkkanäle verläuft. Darüber hinaus ist es spiegelsymmetrisch zu einer zweiten Symmetrieebene ausgebildet, die senkrecht zur Längsrichtung 11 verläuft. Hierbei ist anzumerken, dass die Krümmungsachse 25 und die Längsrichtung 11 senkrecht zueinander ausgerichtet sind. Das Wälzkörperführungsteil besteht aus einem Elastomer.

### Bezugszeichenliste

- 10: Führungsschiene
- 11: Längsrichtung
- 12: Schienenlaufbahn

- 20: Führungswagen
- 21: Wälzkörper
- 22: Umlaufkanal
- 23: Tragabschnitt
- 24: Umlenkkanal
- 25: Krümmungsachse des Umlenkkanals
- 26: Befestigungsschraube
- 27: Kopf der Befestigungsschraube

- 30: Hauptkörper
- 31: Längsstirnfläche des Hauptkörpers
- 32: Rücklaufkanal
- 33: V-förmige Nut
- 34: Basis
- 35: U-Schenkel
- 36: Innengewinde

- 40: Laufbahneinlage
- 41: Wagenlaufbahn

- 50: Endkappe
- 51: radial äußere Umlenkoberfläche
- 52: Befestigungsbohrung
- 53: ringförmige Verteilausnehmung
- 54: äußere Längsstirnfläche der Endkappe
- 55: innere Längsstirnfläche der Endkappe
- 56: Versteifungssteg
- 57: Wälzkörperhaltesteg
- 58: Längsbohrung

- 60: Schmiermittelströmungspfad
- 61: Schmieranschluss
- 61a: seitlicher Schmieranschluss
- 61b: stirnseitiger Schmieranschluss
- 61c: oberer Schmieranschluss
- 62: erster Hohlraum
- 63: zweiter Hohlraum
- 64: Schmierbohrung
- 65: Mündungsöffnung der Schmierbohrung
- 66: erster offener Schmierkanal
- 67: Dichtlippe
- 68: zweiter offener Schmierkanal
- 68a: erster Abschnitt des zweiten Schmierkanals
- 68b: zweiter Abschnitt des zweiten Schmierkanals
- 69: Dichtvorsprung

- 80: Wälzkörperführungsteil
- 81: radial innere Umlenkoberfläche
- 82: Abflachung
- 83: Führungsabschnitt
- 84: Längsdichtlippe

- 90: Enddichtung
- 91: Enddichtlippe
- 95: Abstreifblech
- 96: Senkung

## Patentansprüche

1. Führungswagen (20) zur Verwendung mit einer langgestreckten Führungsschiene (10), wobei der Führungswagen (20) wenigstens eine Reihe von Wälzkörpern (21) aufweist, die in einem zugeordneten endlosen Umlaufkanal (22) aufgenommen sind, wobei der Umlaufkanal (22) einen Tragabschnitt (23) und einen Rücklaufkanal (32) aufweist, welche an ihren gegenüberliegenden Enden über jeweils einen gebogenen Umlenkkanal (24) miteinander verbunden sind, wobei der Tragabschnitt (23) von einer sich in eine Längsrichtung (11) erstreckenden Wagenlaufbahn (41) an dem Führungswagen (20) und einer Schienenlaufbahn (12) an der Führungsschiene (10) begrenzt wird, wobei der Umlenkkanal (24) innerhalb einer gesonderten Endkappe (50) angeordnet ist, wobei die Endkappe (50) zumindest mittelbar an einer Längsstirnfläche (31) eines Hauptkörpers (30) des Führungswagens (20) anliegt, wobei die Endkappe (50) wenigstens eine Befestigungsbohrung (52) aufweist, welche von einer zugeordneten Befestigungsschraube (26) durchsetzt wird, die in den Hauptkörper (30) eingeschraubt ist, wobei in der Endkappe (50) wenigstens ein Schmiermittelströmungspfad (60) vorgesehen ist, welcher sich von einem Schmieranschluss (61; 61a; 61b; 61c) zu einer der wenigstens einen Reihe von Wälzkörpern (21) erstreckt,
wobei zumindest zwischen einer der wenigstens einen Befestigungsbohrung (52) und der zugeordneten Befestigungsschraube (26) ein erster Hohlraum (62) vorgesehen ist, welcher Bestandteil eines des wenigstens einen Schmiermittelströmungspfades (60) ist,
**dadurch gekennzeichnet, dass** die Endkappe (50) von einer Schmierbohrung (64) durchsetzt wird, welche sich ausgehend von einer äußeren, dem Hauptkörper (30) abgewandten Längsstirnfläche (54) der Endkappe (50) in Längsrichtung (11) erstreckt, wobei die Schmierbohrung (64) wälzkörperseitig zum ersten Hohlraum (62) im entsprechenden Schmiermittelströmungspfad (60) angeordnet ist,
wobei an der äußeren Längsstirnfläche (54) der Endkappe (50) ein erster offener Schmierkanal (66) vorgesehen ist, welcher den ersten Hohlraum (62) mit der Schmierbohrung (64) verbindet, wobei er von einer gesonderten Enddichtung (90) abgedeckt wird, welche zumindest abschnittsweise in Form einer ebenen Platte ausgebildet ist.

2. Führungswagen nach Anspruch 1,
wobei mehrere Schmiermittelströmungspfade (60) vorgesehen sind, denen unterschiedliche Schmieranschlüsse (61a; 61b; 61c) und/oder Reihen von Wälzkörpern (21) zugeordnet sind, wobei alle Schmiermittelströmungspfade (60) einen gemeinsamen zweiten Hohlraum (63) aufweisen, wobei der erste Hohlraum (62) wälzkörperseitig zum zweiten Hohlraum (63) im entsprechenden Schmiermittelströmungspfad (60) angeordnet ist.

3. Führungswagen nach einem der vorstehenden Ansprüche,
wobei wenigstens zwei Reihen von Wälzkörpern (21) vorgesehen sind, die zwei benachbarte, parallele Umlenkkanäle (24) aufweisen, wobei sie jeweils eine radial äußere Umlenkoberfläche (51) aufweisen, welche unmittelbar an der Endkappe (50) angeordnet ist, wobei eine Mündungsöffhung (65) der Schmierbohrung (64) zwischen den genannten äußeren Umlenkoberflächen (51) angeordnet ist.

4. Führungswagen nach einem der vorstehenden Ansprüche,
wobei eine radial innere Umlenkoberfläche (81) des Umlenkkanals (24) an einem gesonderten Wälzkörperführungsteil (80) angeordnet ist, welches eine Abflachung (82) aufweist, die gegenüberliegend zu einer Mündungsöffnung (65) der Schmierbohrung (64) angeordnet ist.

5. Führungswagen nach einem der vorstehenden Ansprüche,
wobei der erste offene Schmierkanal (66) in eine ringförmig um die zugeordnete Befestigungsbohrung (52) umlaufende Verteilausnehmung (53) einmündet.

6. Führungswagen nach einem der vorstehenden Ansprüche,
wobei die Enddichtung (90) eine Enddichtlippe (91) aufweist, welche so angeordnet ist, dass sie in Dichteingriff mit der Führungsschiene (10) steht, wenn der Führungswagen (20) auf dieser montiert ist.

7. Führungswagen nach einem der vorstehenden Ansprüche,
wobei die Enddichtung (90) von einem Abstreifblech (95) aus Metall überdeckt wird, wobei die wenigstens eine Befestigungsschraube (26) sowohl das Abstreifblech (95) als auch die Enddichtung (90) durchsetzt.

8. Führungswagen nach Anspruch 7,
wobei die wenigstens eine Befestigungsschraube (26) einen Kopf (27) aufweist, welcher an dem Abstreifblech (95) anliegt, wobei die Befestigungsschraube (26) derart an den verbleibenden Führungswagen (20) angepasst ist, dass das Abstreifblech (95) den einzigen Schraubanschlag für die Befestigungsschraube (26) bildet.

9. Führungswagen nach einem der vorstehenden Ansprüche,
wobei die Endkappe (50) eine innere Längsstirnfläche (55) aufweist, welche dem Hauptkörper (30) zugewandt ist, wobei die innere Längsstirnfläche (55) zumindest abschnittsweise von wenigstens einem Versteifungssteg (56) gebildet wird, der sich parallel zur Längsrichtung (11) erstreckt, wobei an dem wenigstens einen Versteifungssteg (56) im Bereich der inneren Längsstirnfläche (55) ein zweiter offener Schmierkanal (68) vorgesehen ist, welcher Bestandteil des wenigstens einen Schmiermittelströmungspfades (60) ist.

## Revendications

1. Chariot de guidage (20) à utiliser avec un rail de guidage allongé (10), dans lequel le chariot de guidage (20) présente au moins une rangée de corps de roulement (21), qui sont logés dans un canal de circulation sans fin correspondant (22), dans lequel le canal de circulation (22) présente une partie portante (23) et un canal de retour (32), qui sont raccordés l'un à l'autre à leurs extrémités opposées respectivement au moyen d'un canal de renvoi courbe (24), dans lequel la partie portante (23) est limitée par une piste de roulement de chariot (41) s'étendant en direction longitudinale (11) sur le chariot de guidage (20) et par une piste de roulement de rail (12) sur le rail de guidage (10), dans lequel le canal de renvoi (24) est disposé à l'intérieur d'un chapeau d'extrémité séparé (50), dans lequel le chapeau d'extrémité (50) s'applique au moins indirectement sur une face frontale longitudinale (31) d'un corps principal (30) du chariot de guidage (20), dans lequel le chapeau d'extrémité (50) présente au moins un trou de fixation (52), qui est traversé par une vis de fixation associée (26), qui est vissée dans le corps principal (30), dans lequel il est prévu dans le chapeau d'extrémité (50) au moins un chemin d'écoulement de lubrifiant (60), qui s'étend depuis un raccord de lubrification (61; 61a; 61b; 61c) jusqu'à une de ladite au moins une rangée de corps de roulement (21),
dans lequel il est prévu au moins entre un dudit au moins un trou de fixation (52) et la vis de fixation associée (26) un premier espace creux (62), qui fait partie dudit au moins un chemin d'écoulement de lubrifiant (60),
**caractérisé en ce que** le chapeau d'extrémité (50) est traversé par un trou de lubrification (64), qui s'étend en direction longitudinale (11) à partir d'une face frontale longitudinale extérieure (54) du chapeau d'extrémité (50) située à l'opposé du corps principal (30), dans lequel le trou de lubrification (64) est disposé côté corps de roulement vers le premier espace creux (62) dans le chemin d'écoulement de lubrifiant correspondant (60),
dans lequel il est prévu dans la face frontale longitudinale extérieure (54) du chapeau d'extrémité (50) un premier canal de lubrification ouvert (66), qui relie le premier espace creux (62) au trou de lubrification (64), dans lequel il est recouvert par un joint d'étanchéité d'extrémité séparé (90), qui est réalisé au moins localement en forme de plaque plane.

2. Chariot de guidage selon la revendication 1, dans lequel il est prévu plusieurs chemins d'écoulement de lubrifiant (60), auxquels sont associé(e)s différents raccords de lubrification (61a; 61b; 61c) et/ou différentes rangées de corps de roulement (21), dans lequel tous les chemins d'écoulement de lubrifiant (60) présentent un deuxième espace creux commun (63), dans lequel le premier espace creux (62) est disposé côté corps de roulement vers le deuxième espace creux (63) dans le chemin d'écoulement de lubrifiant correspondant (60) .

3. Chariot de guidage selon l'une quelconque des revendications précédentes, dans lequel il est prévu au moins deux rangées de corps de roulement (21), qui présentent deux canaux de renvoi parallèles voisins (24), dans lequel ils présentent respectivement une surface de renvoi radialement extérieure (51), qui est disposée directement sur le chapeau d'extrémité (50), dans lequel une ouverture de sortie (65) du trou de lubrification (64) est disposée entre les surfaces de renvoi extérieures précitées (51).

4. Chariot de guidage selon l'une quelconque des revendications précédentes, dans lequel une surface de renvoi radialement intérieure (81) du canal de renvoi (24) est disposée sur une partie de guidage de corps de roulement séparée (80), qui présente un méplat (82) qui est disposé en face d'une ouverture de sortie (5) du trou de lubrification (64).

5. Chariot de guidage selon l'une quelconque des revendications précédentes, dans lequel le premier canal de lubrification ouvert (66) débouche dans un évidement de distribution (53) entourant sous forme annulaire le trou de fixation associé (52).

6. Chariot de guidage selon l'une quelconque des revendications précédentes, dans lequel le joint d'étanchéité d'extrémité (90) présente une lèvre d'étanchéité d'extrémité (91), qui est disposée de telle manière qu'elle soit en contact étanche avec le rail de guidage (10) lorsque le chariot de guidage (20) est monté sur celui-ci.

7. Chariot de guidage selon l'une quelconque des revendications précédentes, dans lequel le joint d'étanchéité d'extrémité (90) est recouvert d'une tôle de raclage (95) en métal, dans lequel ladite au moins une vis de fixation (26) traverse aussi bien la tôle de raclage (95) que le joint d'étanchéité d'extrémité (90) .

8. Chariot de guidage selon la revendication 7, dans lequel ladite au moins une vis de fixation (26) présente une tête (27), qui s'applique sur la tôle de raclage (95), dans lequel la vis de fixation (26) est adaptée au chariot de guidage restant (20), de telle manière que la tôle de raclage (95) forme la seule butée de vis pour la vis de fixation (26).

9. Chariot de guidage selon l'une quelconque des revendications précédentes, dans lequel le chapeau d'extrémité (50) présente une face frontale longitudinale intérieure (55), qui est tournée vers le corps principal (30), dans lequel la face frontale longitudinale intérieure (55) est formée au moins localement par au moins une nervure de renforcement (56), qui s'étend parallèlement à la direction longitudinale (11), dans lequel il est prévu sur ladite au moins une nervure de renforcement (56) dans la région de la face frontale longitudinale intérieure (55) un deuxième canal de lubrification ouvert (68), qui fait partie dudit au moins un chemin d'écoulement de lubrifiant (60).

## Claims

1. Guide carriage (20) for use with an elongated guide rail (10), the guide carriage (20) having at least one row of rolling bodies (21) which are accommodated in an assigned continuous bypass channel (22), the bypass channel (22) having a supporting portion (23) and a return channel (32), which are connected to one another at their opposite ends via in each case a curved bypass channel (24), the supporting portion (23) being delimited by a carriage track (41) extending in a longitudinal direction (11) on the guide carriage (20) and a rail track (12) on the guide rail (10), the bypass channel (24) being arranged within a separate end cap (50), the end cap (50) bearing at least indirectly against a longitudinal end face (31) of a main body (30) of the guide carriage (20), the end cap (50) having at least one fastening bore (52) through which an assigned fastening screw (26) passes which is screwed into the main body (30), at least one lubricant flow path (60) being provided in the end cap (50), which lubricant flow path (60) extends from a lubrication port (61; 61a; 61b; 61c) to one of the at least one row of rolling bodies (21),
wherein a first cavity (62) is provided at least between one of the at least one fastening bore (52) and the assigned fastening screw (26), which cavity (62) is a component of one of the at least one lubricant flow path (60),
**characterized in that** a lubrication bore (64) passes through the end cap (50), which lubrication bore (64) extends from an outer longitudinal end face (54), facing away from the main body (30), of the end cap (50) in the longitudinal direction (11), the lubrication bore (64) being arranged on the rolling body side of the first cavity (62) in the corresponding lubricant flow path (60), wherein a first open lubrication channel (66) is provided on the outer longitudinal end face (54) of the end cap (50), which lubrication channel (66) connects the first cavity (62) to the lubrication bore (64), it being covered by a separate end seal (90) which is formed at least in portions in the form of a flat plate.

2. Guide carriage according to Claim 1,
wherein several lubricant flow paths (60) are provided to which different lubrication ports (61a; 61b; 61c) and/or rows of rolling bodies (21) are assigned, all the lubricant flow paths (60) having a shared second cavity (63), the first cavity (62) being arranged on the rolling body side of the second cavity (63) in the corresponding lubricant flow path (60).

3. Guide carriage according to any one of the preceding claims,
wherein at least two rows of rolling bodies (21) are provided which have two adjacent, parallel bypass channels (24), wherein they have in each case a radially outer bypass surface (51) which is arranged directly on the end cap (50), a discharge opening (65) of the lubrication bore (64) being arranged between the stated outer bypass surfaces (51) .

4. Guide carriage according to any one of the preceding claims,
wherein a radially inner bypass surface (81) of the bypass channel (24) is arranged on a separate rolling body guide part (80) which has a flat section (82) which is arranged opposite a discharge opening (65) of the lubrication bore (64)

5. Guide carriage according to any one of the preceding claims,
wherein the first open lubrication channel (66) discharges into a distribution recess (53) which annularly surrounds the assigned fastening bore (52) .

6. Guide carriage according to any one of the preceding claims,
wherein the end seal (90) has an end sealing lip (91) which is arranged so that it is in sealing engagement with the guide rail (10) when the guide carriage (20) is mounted thereon.

7. Guide carriage according to any one of the preceding claims,
wherein the end seal (90) is covered by a deflector plate (95) composed of metal, the at least one fastening screw (26) passing through both the deflector plate (95) and the end seal (90) .

8. Guide carriage according to Claim 7,
wherein the at least one fastening screw (26) has a head (27) which bears against the deflector plate (95), the fastening screw (26) being adapted to the remaining guide carriage (20) in such a manner that the deflector plate (95) forms the single screw stop for the fastening screw (26).

9. Guide carriage according to any one of the preceding claims,
wherein the end cap (50) has an inner longitudinal end face (55) which faces towards the main body (30), the inner longitudinal end face (55) being formed at least in portions by at least one reinforcement web (56) which extends parallel to the longitudinal direction (11), a second open lubrication channel (68) being provided on the at least one reinforcement web (56) in the region of the inner longitudinal end face (55), which lubrication channel (68) is a component of the at least one lubricant flow path (60).
